(19) Europäisches Patentamt
European Patent Office
Office européen des brevets

(11) EP 1 476 005 A1

(12) # EUROPEAN PATENT APPLICATION
published in accordance with Art. 158(3) EPC

(43) Date of publication:
**10.11.2004 Bulletin 2004/46**

(21) Application number: **03700532.9**

(22) Date of filing: **10.01.2003**

(51) Int Cl.[7]: **H05K 5/02**, H04M 1/02

(86) International application number:
**PCT/JP2003/000169**

(87) International publication number:
**WO 2003/067948 (14.08.2003 Gazette 2003/33)**

(84) Designated Contracting States:
**AT BE BG CH CY CZ DE DK EE ES FI FR GB GR HU IE IT LI LU MC NL PT SE SI SK TR**

(30) Priority: **07.02.2002 JP 2002030857**

(71) Applicant: **Nippon Sheet Glass Co.,Ltd.**
**Tokyo 105-8552 (JP)**

(72) Inventors:
- **FUKUCHI, Hidetoshi, Nippon Sheet Glass Co., Ltd. Osaka-shi, Osaka 541-8559 (JP)**
- **INO, Juichi, Nippon Sheet Glass Co., Ltd. Osaka-shi, Osaka 541-8559 (JP)**
- **SHINOHARA, Hidenori, Nippon Sheet Glass Co., Ltd. Osaka-shi, Osaka 541-8559 (JP)**

(74) Representative: **Kohler Schmid Möbus, Patentanwälte**
**Ruppmannstrasse 27**
**70565 Stuttgart (DE)**

(54) **RADIO COMMUNICATION EQUIPMENT**

(57) There is provided a wireless communication apparatus having an appearance with a high glitter without radio interference being caused. The wireless communication apparatus includes a member obtained by molding a resin composition containing at least one material selected from the group consisting of glass flakes and silica flakes, or a member obtained by molding a resin composition containing a glittery pigment obtained by coating the above at least one selected material with at least one selected from the group consisting of a metal and a metal oxide, or else a member having thereon a paint film containing the above at least one selected material, or a paint film containing the above glittery pigment.

EP 1 476 005 A1

Printed by Jouve, 75001 PARIS (FR)

## Description

Technical Field

The present invention relates to a wireless communication apparatus which has an appearance with a high dazzling glitter.

Background Art

Conventionally, as wireless communication apparatuses, intercoms, cordless phones and portable information terminals or personal digital assistants (PDAs), for example, have been commercially available on the market. Nowadays, apparatuses using wireless local area networks (LANs) such as apparatuses using Bluetooth technology are sold on the market. Further, studies are being made to develop "Home Gateway" devices and apparatuses as nodes for connecting digital household appliances and the Internet, and it is expected that many kinds of electric products including household appliances will be digitalized such that wireless communication between such products will become possible.

Such wireless communication apparatuses carry out information transfer by transmitting and receiving radio waves, and therefore their components, particularly the housings as the largest components, are required to be made of a material that does not cause radio interference.

Thus, conventionally housings made of metal are shunned and housings made of resin are generally used. In particular, with portablization of wireless communication apparatuses, an increased number of wireless communication apparatuses with smaller housings and built-in antennas have come to be used, so that the influence of the housings on radio interference has increased.

Meanwhile, the portablization of wireless communication apparatuses causes the apparatus design to be an important factor for selecting a wireless communication apparatus to be purchased. One way to enhance the design of a wireless communication apparatus is to have a lustrous pigment contained in a component member giving rise to the appearance of the apparatus. The lustrous pigment is blended and added to the component member by being blended in advance into the resin composition for the component member before molding of the resin composition, or being blended into a paint to be applied over the component member after molding, such that the lustrous pigment exists on the outer surface of the component member. The lustrous pigment reflects light so that the component member exhibits a dazzlingly glittering appearance. In this connection, it is considered that a wireless communication apparatus with a glittering appearance gives an impression of being machine-like to the psychology of a person viewing the same, and sells better than a wireless communication apparatus without a glittering appearance. Therefore, glitter is important for the appearance of a wireless communication apparatus and has much effect on the sales of the product.

As the lustrous pigment, flaky aluminum powder, mica flake particles or graphite flake particles coated with a metal oxide such as titanium dioxide or iron oxide, or iron oxide particles composed mainly of $\alpha$-iron oxide crystal grains are well known.

However, a metallic powder such as aluminum powder shields radio waves due to being electrically conductive and magnetic and is therefore not suitable for use in wireless communication apparatuses. A pigment comprised of mica flakes coated with titanium dioxide or the like (pearl mica) does not shield radio waves, but has a low surface smoothness and is hence prone to being short of glitter. In addition, such mica flakes are cleavable, and hence the particles are crushed during kneading into the resin composition or the paint, resulting in the glitter further lowering. Moreover, graphite flake particles coated with a metal oxide have an appearance affected by the black color of the graphite and are therefore limited in application insofar as they are utilized in terms of design. Further, $\alpha$-iron oxide crystal grains also exhibit a brown to black color and therefore, similarly to graphite flake particles, are limited in application insofar as they are utilized in terms of design.

The present invention has been devised in view of the problems described above; it is an object of the invention to provide a wireless communication apparatus having a readily visible component member such as a housing, the component member being obtained by blending glass flakes or the like having a high surface smoothness into a resin composition or a paint either as they are or after coating the surface of the glass flakes with a metal or a metal oxide, and then molding the resin composition into the component member or applying the paint to form a paint film over the surface of the component member, whereby the wireless communication apparatus has an appearance with a high glitter without radio interference being caused.

Disclosure of the Invention

To attain the above object, in a first aspect of the present invention, there is provided a wireless communication apparatus including a member obtained by molding a resin composition containing at least one material selected from the group consisting of glass flakes and silica flakes.

In the first aspect of the present invention, preferably, the resin composition contains 5 to 30wt% of the at least one selected material.

To attain the above object, in a second aspect of the present invention, there is provided a wireless communication apparatus including a member having thereon a paint film containing at least one material selected from the group consisting of glass flakes and silica flakes.

To attain the above object, in a third aspect of the present invention, there is provided a wireless communication apparatus including a member obtained by molding a resin composition containing a glittery pigment obtained by coating at least one material selected from the group consisting of glass flakes and silica flakes with at least one selected from the group consisting of a metal and a metal oxide.

In the third aspect of the present invention, it is preferable for the glittery pigment to be obtained by coating the at least one selected material with titanium dioxide.

In the third aspect of the present invention, preferably, the titanium dioxide is of a rutile type.

In the third aspect of the present invention, it is also preferable for the glittery pigment to be obtained by coating the at least one selected material with a thin metal oxide film of thickness 40 to 300nm.

In the third aspect of the present invention, it is also preferable for the glittery pigment to be obtained by coating the at least one selected material with a thin metal film of thickness 30 to 200nm.

In the third aspect of the present invention, in the case that the glittery pigment is coated with the metal oxide, preferably, the resin composition contains 1 to 30wt% of the glittery pigment.

In the third aspect of the present invention, in the case that the glittery pigment is coated with the metal, preferably, the resin composition contains 1 to 20wt% of the glittery pigment.

To attain the above object, in a fourth aspect of the present invention, there is provided a wireless communication apparatus including a member having thereon a paint film containing a glittery pigment obtained by coating at least one material selected from the group consisting of glass flakes and silica flakes with at least one selected from the group consisting of a metal and a metal oxide.

Brief Description of the Drawings

FIG. 1 is a graph showing electromagnetic wave shielding ability measurement results for Example 1; and

FIG. 2 is a graph showing electromagnetic wave shielding ability measurement results for Comparative Example 1.

Best Mode for Carrying Out the Invention

Embodiments of the present invention will now be described in detail. It should be noted, however, that the present invention is not limited to these embodiments.

Glass flakes or silica flakes (hereinafter these will be referred to as "base material") are insulators, and hence do not shield radio waves. Moreover, glass flakes or silica flakes do not have an absorption band in the visible region, and are scale-like particles having a very high surface smoothness. Light reflected at the surface of the base material is thus not colored or scattered, and hence keeps almost the same brightness as it had before being reflected. Furthermore, such a base material is not cleavable, and hence is not prone to being crushed when blended or kneaded into a resin composition or a paint. Consequently, when the base material is blended/added into a resin composition or a paint as it is, the resin composition or paint film exhibits a glitter comparable to or greater than in the case of using a conventional lustrous pigment, but without shielding radio waves. A component member obtained by molding a resin composition containing the base material, or a component member having thereon a paint film containing the base material is thus capable of enhancing the design of a wireless communication apparatus, while satisfying the properties required for the wireless communication apparatus. Here, "silica flakes" refers to scale-like particles made of only silicon oxide.

Regarding the form of the base material, the flakes preferably have a mean particle diameter of 5 to 1,000μm, and a mean thickness of 0.5 to 5μm. Here, the mean particle diameter is the mean of the longest diameter on the smooth surface. If the mean particle diameter is too high, then the base material will be prone to being crushed when blended or kneaded into the resin composition or paint, and hence it will be difficult to maintain the original particle diameter. Moreover, in the case that the base material is coated with a thin film of a metal or a metal oxide as described later, upon the base material being crushed, fracture surfaces not coated with the metal or metal oxide will appear, and hence there will also be a problem of the glitter of reflected light dropping. On the other hand, if the mean particle diameter is too low, then the base material flakes will become orientated in various directions in the resin composition or paint film, and hence light will also be reflected in various directions, and thus the glitter will drop due to scattering of the reflected light. Moreover, if the mean thickness of the base material is less than 0.5μm, then the base material flakes will be insufficiently strong, and hence the base material flakes will deform in the resin composition or paint film, i.e. the smooth surfaces will become curved, and hence the reflected light will be prone to being scattered. On the other hand, if the mean thickness is greater than 5μm, then the flexibility of the base material flakes will drop, and hence the base material flakes will be prone to breaking when being blended or kneaded into the resin composition or paint.

By coating the base material with a thin film of a metal or a metal oxide, the brightness of light reflected at the surface of the base material can be further increased, and/or the reflected light can be given a metallic color (hereinafter the pigment obtained by coating the base material with a metal or metal oxide will be referred to as "glittery pigment"). The glittery pigment is obtained by forming a thin film of the metal or metal oxide by sputtering, solution deposition or the like on the surface of the base material which has high surface smoothness; the surface state of the base material is thus reflected as it is in the surface of the glittery pigment, and hence the surface of the glittery pigment is very smooth. Furthermore, in the case that the glittery pigment has a thin film of a metal oxide thereon, whereas the refractive index of the base material will be approximately 1.5, the refractive index of the metal oxide will generally be higher than this, and hence the difference in refractive index with the air at the surface of the glittery pigment will be increased, and due to this increase in the refractive index difference, reflection will occur yet more readily. Moreover, if the glittery pigment has a thin film of a metal thereon, then the reflected light will exhibit a color characteristic of this metal.

In the case that a thin film of a metal is used, there are no particular limitations on the metal constituting the thin film, but examples are gold, silver, nickel, copper, tin, zinc, and alloys thereof. It should be noted, however, that the thicker the thin film of the metal, the more marked shielding of radio waves will be, and hence it is necessary to keep this thickness down to not more than 200nm. On the other hand, to reflect visible light, the thickness must be at least 30nm.

In the case of using a metal oxide, there are no particular limitations on the metal oxide; examples include titanium dioxide, tin oxide, zinc oxide, indium-doped tin oxide (ITO), aluminum oxide, iron oxide, silicon oxide, zirconium oxide, bismuth oxide, and cerium oxide. Of these, rutile-type titanium dioxide is preferable. Rutile-type titanium dioxide has higher chemical stability and a higher refractive index than the anatase type; the refractive index of rutile-type titanium dioxide is typically 2.70.

Metal oxides are generally insulators, with some being semiconductors. The glittery pigment coated with the metal oxide will thus not cause radio interference. Moreover, metal oxides are mostly colorless, and hence reflected light will not be colored. In other words, there will be no absorption of the reflected light, and hence the light will maintain a high brightness after reflection.

The thickness of the thin film of the metal oxide is preferably 40 to 300nm. If this thickness is less than 40nm, then the function of increasing the brightness of reflected light and a function of preventing leaching out of alkaline components will not be exhibited sufficiently. On the other hand, if the thickness is greater than 300nm, then the flexibility of the base material may be lost. Note that the thin film of the metal oxide will generally be transparent, and hence light will be reflected at both the surface of the thin film and the surface of the base material. The light reflected at the surface of the thin film and the light reflected at the surface of the base material may thus interfere, producing an interference color. The conditions for producing the interference color can be determined from a known formula involving the thickness and the refractive index of the thin film. A thin film of a metal oxide having a thickness that satisfies this formula while being within the above range may be formed.

In the case that the base material is comprised of glass flakes, it is known that alkaline components contained therein will leach out from the surface thereof over time. Resin or paint components contacting the base material will deteriorate through this leaching out of alkaline components, and moreover the surface smoothness of the glass flakes themselves will drop. In the case of the glittery pigment described above, the whole of each of the glass flakes is covered with the thin film of the metal or metal oxide, and hence the leaching out of alkaline components is suppressed. In particular, a thin film of a metal oxide has high chemical durability, and hence is effective in preventing the leaching out of alkaline components.

Examples of the glittery pigment include Metashine series glittery pigments made by Nippon Sheet Glass Co., Ltd.). Specific ones include the Metashine nickel series in which nickel is electrolessly plated onto the surface of glass flakes (MC5480NS, MC5230NS, MC5150NS, MC5140NS, MC5090NS, MC5030NS, MC5480NB, MC5230NB, MC5150NB, MC5140NB, MC5090NB, MC5030NB, MC1040NB, MC1020NB), the Metashine silver series in which silver is electrolessly plated onto the surface of glass flakes (MC5480PS, MC5230PS, MC5150PS, MC5140PS, MC5090PS, MC5030PS, MC2080PS, MC2040PS, MC2025PS), the Metashine gold series in which gold is electrolessly plated onto the surface of glass flakes, and the Metashine titania coat series in which rutile-type titanium dioxide is coated onto the surface of glass flakes (MC5030RS, MC5090RS, MC5090RY, MC5090RR, MC5090RB, MC5090RG, MC1080RS, MC1080RY, MC1080RR, MC1080RB, MC1080RG, MC1040RS, MC1040RY, MC1040RR, MC1040RB, MC1040RG, MC1020RS, MC1020RY, MC1020RR, MC1020RB, MC1020RG). One of these may be used, or two or more may be used mixed together.

Moreover, the glittery pigment may be subjected to surface treatment with silica or a coupling agent to improve the water resistance and the ability to be kneaded into the resin composition or paint, and/or may have a ultraviolet-absorbing thin film formed thereon to improve the light resistance.

In the case of blending glass flakes and/or silica flakes as described above into a paint, the content of the glass flakes and/or silica flakes is preferably 5 to 30wt% in the state that the solvent in the paint has been removed to form a paint film. Moreover, in the case of blending glass flakes and/or silica flakes as described above into a resin composition, the content of the glass flakes and/or silica flakes is again preferably made to be 5 to 30wt%. If the content is less than 5wt%, then the glitter will be insufficient, whereas if the content is greater than 30wt%, then the relative amount of a resin component will be insufficient, and hence the integrity of the paint film or resin composition will be lost.

Moreover, in the case of blending/adding a glittery pigment having a thin metal oxide film thereon as described above into a resin composition or paint film, the content of the glittery pigment is preferably 1 to 30wt% in the state that the solvent has been removed. If the content is less than 1wt%, then the glitter will tend to be insufficient, whereas if the content is greater than 30wt%, then the proportion of the resin component in the resin composition or paint film will drop relatively, and hence the strength of the resin composition or paint film may be lost. The content is more preferably 5 to 15wt%.

In the case of blending/adding a glittery pigment having a thin metal film thereon as described above into a resin composition or paint film, the content of the glittery pigment is preferably 1 to 20wt% in the state that the solvent has been removed, more preferably 5 to 15wt%. If the content is less than 1wt%, then the glitter will be insufficient, whereas if the content is greater than 20wt%, then the glittery pigment particles may contact one another, and hence the resin composition or paint film may become electrically conductive or magnetic, and thus the ability to transmit radio waves may be lost.

There are no particular limitations on the type of the resin component in the resin composition or the paint. Examples include thermosetting resins such as acrylic resins, polyester resins, epoxy resins, phenol resins, urea resins, fluororesins, polyester-urethane curable resins, epoxy-polyester curable resins, acrylic-polyester resins, acrylic-urethane curable resins, acrylic-melamine curable resins, and polyester-melamine curable resins, and thermoplastic resins such as polyethylene resins, polypropylene resins, petroleum resins, thermoplastic polyester resins, and thermoplastic fluororesins. In the case of a thermoplastic resin, injection molding is possible, and hence a molded article having a complex shape can be obtained. Moreover, for example, a polyisocyanate, an amine, a polyamide, a polybasic acid, an acid anhydride, a polysulfide, boron trifluoride acid, an acid dihydrazide, or an imidazole can be used as a curing agent. Furthermore, in addition to the base material or glittery pigment described above, other color pigments that are not electrically conductive or magnetic may be blended/added to the resin composition or paint film.

The paint film or resin composition containing the glass flakes, silica flakes and/or glittery pigment exhibits a high glitter through reflected light, without shielding radio waves, and can thus be used for any of various component members of wireless communication apparatuses such as housings.

The present invention will now be described more concretely through an example. However, the present invention is not limited to the example described below.

Example 1

A glittery pigment comprised of glass flakes coated with nickel through electroless plating (MC1040NB made by Nippon Sheet Glass Co., Ltd., mean particle diameter 40 μm, mean thickness 1μm, nickel film thickness 100nm) was kneaded into a urethane-type clear paint such that the content of the glittery pigment in the paint film would be 5wt%, and the paint was applied onto a pre-prepared 0.3mm-thick polyester film using a spray such that the mean film thickness would be 200μm. Once it had been confirmed that the paint film had completely dried, a 150mm×150mm test piece was cut out, and using a combination of TR-17301A and R3361A apparatuses made by Advantest Corporation, the electromagnetic wave shielding ability of the test piece was measured. The measurement method was a method in which the shielding effect is evaluated as the shielding effect against electric field waves and magnetic field waves in near electromagnetic waves through differences in the electromagnetic wave source. The electromagnetic wave shielding effect (SE) is defined as

$$SE = 20 \times \log(E0/E1)\ (dB)$$

wherein the ordinary electric field strength in a space with no shielding material is represented by E0 (V/m), and the electric field strength when the shielding material is introduced becomes E1 (V/m). Here, it is assumed that the incident electromagnetic waves are plane waves, the shielding material is infinitely large in size, and the electromagnetic waves are perpendicularly incident on the shielding material.

The results of measurements over a frequency range of 0 to 1,000MHz are shown in FIG. 1. From FIG. 1, it can be seen that the test piece did not shield electromagnetic waves at all. It can thus be concluded that the paint film containing the glittery pigment could be used as a paint film on a wireless communication apparatus. Furthermore, five assessors were asked to visually evaluate the glitter of the test piece in a room of ordinary brightness. The result was that all of the assessors evaluated the glitter as being higher than for a test piece of Comparative Example 1 described below.

Comparative Example 1

A test piece was prepared as in Example 1, except that commercially available aluminum flakes (Alpaste 0100X made by Toyo Aluminium K.K., mean particle diameter 45 μm, mean thickness 0.3μm) were used

as a lustrous pigment instead of the glittery pigment of Example 1, and the electromagnetic wave shielding ability was measured. The measurement results are shown in FIG. 2.

It can be seen from FIG. 2 that the test piece exhibits a maximum shielding effect of 80dB. This is a level that would cause communication interference with a mobile phone or the like. Moreover, the result of evaluation of the glitter by the five assessors was that the test piece did have glitter, but that there was a clear difference in the glitter when compared with the test piece of Example 1.

Industrial Applicability

According to the wireless communication apparatus of the present invention having a member obtained by molding a resin composition containing at least one material selected from the group consisting of glass flakes and silica flakes, the appearance of the wireless communication apparatus can be given enhanced design due to glitter, without communication interference being brought about.

## Claims

1. A wireless communication apparatus including a member obtained by molding a resin composition containing at least one material selected from the group consisting of glass flakes and silica flakes.

2. A wireless communication apparatus as claimed in claim 1, wherein said resin composition contains 5 to 30wt% of the at least one selected material.

3. A wireless communication apparatus including a member having thereon a paint film containing at least one material selected from the group consisting of glass flakes and silica flakes.

4. A wireless communication apparatus as claimed in claim 3, wherein said paint film contains 5 to 30wt% of the at least one selected material.

5. A wireless communication apparatus including a member obtained by molding a resin composition containing a glittery pigment obtained by coating at least one material selected from the group consisting of glass flakes and silica flakes with at least one selected from the group consisting of a metal and a metal oxide.

6. A wireless communication apparatus as claimed in claim 5, wherein said glittery pigment is obtained by coating the at least one selected material with titanium dioxide.

7. A wireless communication apparatus as claimed in claim 6, wherein said titanium dioxide is of a rutile type.

8. A wireless communication apparatus as claimed in claim 5, wherein said glittery pigment is obtained by coating the at least one selected material with a thin metal oxide film of thickness 40 to 300nm.

9. A wireless communication apparatus as claimed in claim 5, wherein said glittery pigment is obtained by coating the at least one selected material with a thin metal film of thickness 30 to 200nm.

10. A wireless communication apparatus as claimed in claim 5, wherein said glittery pigment is coated with the metal oxide, and said resin composition contains 1 to 30wt% of said glittery pigment.

11. A wireless communication apparatus as claimed in claim 5, wherein said glittery pigment is coated with the metal, and said resin composition contains 1 to 20wt% of said glittery pigment.

12. A wireless communication apparatus including a member having thereon a paint film containing a glittery pigment obtained by coating at least one material selected from the group consisting of glass flakes and silica flakes with at least one selected from the group consisting of a metal and a metal oxide.

13. A wireless communication apparatus as claimed in claim 12, wherein said glittery pigment is obtained by coating the at least one selected material with titanium dioxide.

14. A wireless communication apparatus as claimed in claim 13, wherein said titanium dioxide is of a rutile type.

15. A wireless communication apparatus as claimed in claim 12, wherein said glittery pigment is obtained by coating the at least one selected material with a thin metal oxide film of thickness 40 to 300nm.

16. A wireless communication apparatus as claimed in claim 12, wherein said glittery pigment is obtained by coating the at least one selected material with a thin metal film of thickness 30 to 200nm.

17. A wireless communication apparatus as claimed in claim 12, wherein said glittery pigment is coated with the metal oxide, and said paint film contains 1 to 30wt% of said glittery pigment.

18. A wireless communication apparatus as claimed in claim 12, wherein said glittery pigment is coated with the metal, and said paint film contains 1 to 20wt% of said glittery pigment.

FIG. 1

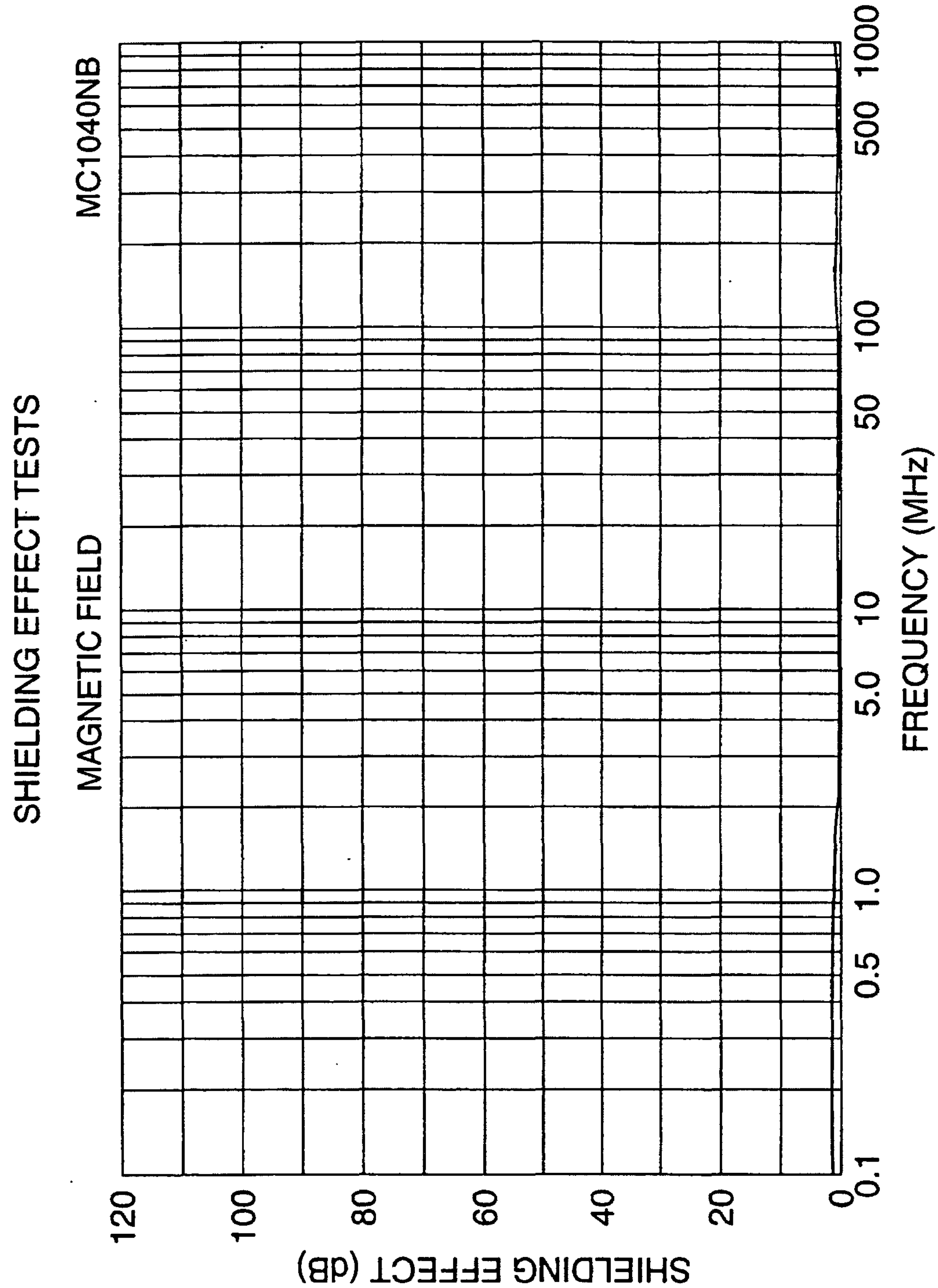
SHIELDING EFFECT TESTS
MAGNETIC FIELD
MC1040NB
SHIELDING EFFECT (dB)
120
100
80
60
40
20
0
0.1
0.5
1.0
5.0
10
50
100
500
1000
FREQUENCY (MHz)

*FIG. 2*

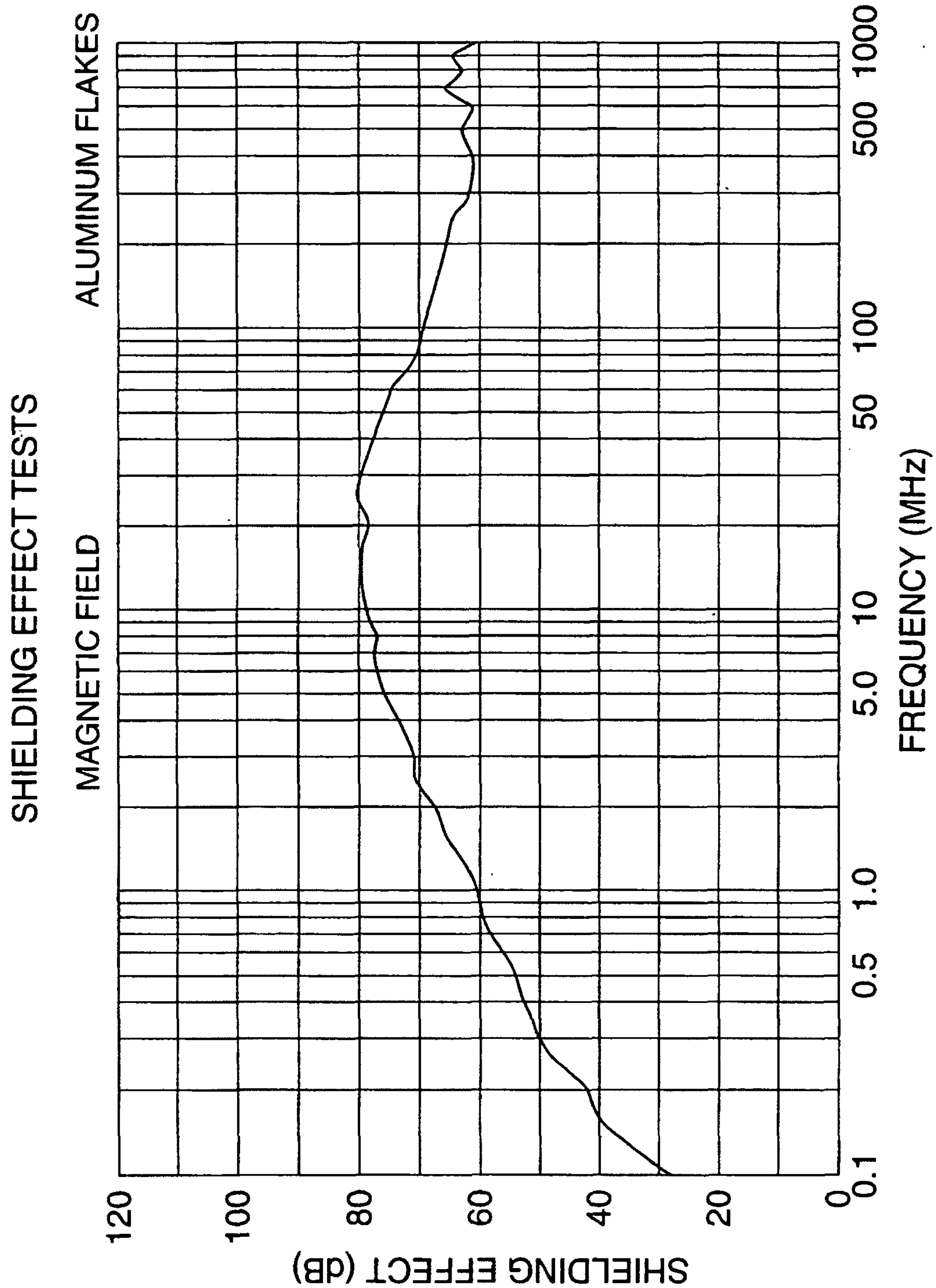
SHIELDING EFFECT TESTS
MAGNETIC FIELD
ALUMINUM FLAKES
SHIELDING EFFECT (dB)
120
100
80
60
40
20
0
0.1
0.5
1.0
5.0
10
50
100
500
1000
FREQUENCY (MHz)

## INTERNATIONAL SEARCH REPORT

International application No. PCT/JP02/00169

**A. CLASSIFICATION OF SUBJECT MATTER**

Int.Cl$^7$ H05K5/02, H04M1/02

According to International Patent Classification (IPC) or to both national classification and IPC

**B. FIELDS SEARCHED**

Minimum documentation searched (classification system followed by classification symbols)

Int.Cl$^7$ H05K5/02, H04M1/02

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 11-340639 A (Matsushita Electric Industrial Co., Ltd.), 10 December, 1999 (10.12.99), Full text; all drawings (Family: none) | 1-18 |
| Y | JP 2000-349874 A (Yasuo DAIDOJI), 15 December, 2000 (15.12.00), Full text; all drawings (Family: none) | 1-18 |
| Y | JP 2001-226601 A (Nippon Sheet Glass Co., Ltd.), 21 August, 2001 (21.08.01), Full text; all drawings (Family: none) | 1-18 |

[X] Further documents are listed in the continuation of Box C. [ ] See patent family annex.

* Special categories of cited documents:
- "A" document defining the general state of the art which is not considered to be of particular relevance
- "E" earlier document but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 30 January, 2003 (30.01.03) | 12 February, 2003 (12.02.03) |
| Name and mailing address of the ISA/ Japanese Patent Office | Authorized officer |
| Facsimile No. | Telephone No. |

Form PCT/ISA/210 (second sheet) (July 1998)

**INTERNATIONAL SEARCH REPORT**

International application No.
PCT/JP03/00169

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2001-323217 A (Nippon Sheet Glass Co., Ltd.), 22 November, 2001 (22.11.01), Full text; all drawings (Family: none) | 1-18 |

Form PCT/ISA/210 (continuation of second sheet) (July 1998)